# FASCICULE DE BREVET EUROPEEN

(11) **EP 2 109 575 B1**
(45) Date de publication et mention de la délivrance du brevet: **08.08.2012**
(21) Numéro de dépôt: 07872009.1
(22) Date de dépôt: 21.12.2007
(51) Int. Cl.: B65G 1/127

(54) **DISPOSITIF DE STOCKAGE D'OBJETS SUR PALETTES MOBILES**
VORRICHTUNG ZUR LAGERUNG VON OBJEKTEN AUF EINER MOBILEN PALETTE
DEVICE FOR STORING OBJECTS ON A MOBILE PALLET

(30) Priorité: 31.01.2007 FR 0752987
(43) Date de publication de la demande: 21.10.2009
(73) Titulaire: Regolle, Jacques, 59650 Villeneuve D'ascq (FR)
(72) Inventeur: Regolle, Jacques, 59650 Villeneuve D'ascq (FR)
(74) Mandataire: Cochonneau, Olivier
(86) Numéro de dépôt international: PCT/FR2007/052599
(87) Numéro de publication internationale: WO 2008/093030

(56) Documents cités:
- DE-A1- 10 141 074
- JP-A- 10 331 470
- US-A- 4 601 386

## Description

La présente invention concerne un dispositif de stockage d'objets sur palettes mobiles, selon le préambule de la revendication 1.

L'invention sera particulièrement prévue pour le stockage d'objets sous forme de colis ou paquets, le dispositif de stockage pouvant être disposé notamment dans des usines ou des entrepôts.

Toutefois, bien que particulièrement prévu pour de telles applications, le dispositif de stockage pourra également permettre le stockage d'autres types d'objets avec des dimensions diverses.

Le dispositif de stockage pourra également présenter des dimensions variables en vue d'équiper différents types de locaux notamment des magasins ou encore des sites d'archivage.

On connaît déjà dans l'état de l'art de nombreux types de dispositifs de stockage d'objets sur palettes.

Un premier type de réalisation consiste à réaliser un bâti relié à deux chaînes sans fin motorisées avec une série de palettes entraînées par les chaînes et permettant de déplacer par des moyens de commande les palettes de manière à favoriser la pose et le retrait des objets sur ces palettes.

Ce type de dispositif de stockage est particulièrement intéressant par rapport aux dispositifs équipés de palettes fixes puisqu'on peut aisément stocker sur ces dispositifs des objets sans utiliser de chariot élévateur et donc en minimisant les opérations délicates de pose et de dépose d'objets à des hauteurs élevées.

Dans certains de ces dispositifs, seul un des deux plans verticaux est utilisé pour la manoeuvre des plateaux mobiles. Dans d'autres applications, on utilise les deux plans verticaux, le transfert du plateau d'un plan vertical sur le deuxième plan vertical pouvant être suivant la cinématique soit effectué avec des objets stockés si le transfert de la palette d'un plan vertical vers le second plan vertical se fait horizontalement soit après avoir retiré les objets notamment lorsque le transfert se fait en effectuant une rotation de la palette en partie haute et en partie basse du dispositif.

Dans le document JP-10331470 A, il est décrit un dispositif de stockage selon le préambule de la revendication 1. En outre, des moyens de liaison sont agencés entre chaque chaîne et chaque palette. Par ailleurs, ce dispositif de stockage comprend des moyens d'entraînement horizontaux qui sont agencés en partie inférieure et en partie supérieure au niveau des zones de retour sur les chaînes. Ce dispositif de stockage, selon JP-10331470A, prévoit un système de connexion/déconnexion des palettes vis-à-vis des chaînes lorsque lesdites palettes sont positionnées au niveau des moyens d'entraînement horizontaux, en partie supérieure et en partie inférieure. Cela permet lorsque la palette est positionnée, dans un premier plan vertical des chaînes, en partie supérieure et en partie inférieure, de déconnecter celle-ci vis-à-vis des chaînes, les moyens d'entraînement assurant ensuite un déplacement horizontal de la palette en la maintenant horizontalement, du premier plan vertical des chaînes vers le second plan vertical des chaînes, ladite palette étant enfin reconnectée aux chaînes dans ce second plan vertical des chaînes, pour effectuer un déplacement inverse, vers le haut ou vers le bas.

Parmi l'ensemble des dispositifs de stockage d'objets existants, la demanderesse a constaté qu'il n'existait pas de dispositif de stockage permettant de disposer des objets sur des palettes mobiles placées en porte-à-faux autorisant le passage d'un premier plan vertical au second plan vertical avec la possibilité de conserver les objets sur la palette lors du transfert entre les deux plans verticaux.

Par ailleurs, il est important de noter que la possibilité d'avoir des palettes disposées en porte-à-faux notamment avec un porte-à-faux important permet d'augmenter considérablement la surface de la palette et par conséquent d'augmenter d'autant le volume de stockage utile par palette ; le porte-à-faux facile également la pose et la dépose d'objets sur les palettes.

La présente invention a pour objet de proposer un tel dispositif de stockage, c'est-à-dire un dispositif de stockage avec des palettes mobiles disposées en porte-à-faux et dans lequel le transfert d'un plan vertical sur le second plan vertical peut être réalisé avec des objets disposés sur la palette en transfert.

Un autre objet de la présente invention est de proposer un dispositif de stockage d'objets sur palettes mobiles dans lequel chaque palette dispose d'une grande stabilité durant tout son trajet.

Un autre objet de la présente invention est de proposer un dispositif de stockage d'objets sur palettes mobiles dans lequel les vitesses d'entraînement des palettes peut être variable et dans lequel la vitesse d'entraînement de la chaîne n'a pas besoin d'être modifiée même lorsqu'une palette est dans une section horizontale du trajet.

Un autre objet de la présente invention est de proposer un dispositif de stockage d'objets dans lequel la fixation des palettes sur les chaînes peut être réalisée aisément et permet à un opérateur d'ajouter ou de retirer une palette ou encore de modifier l'écart entre les palettes sans nécessité d'effectuer d'opération manuelle longue ou encore d'intervention sur le bâti du dispositif de stockage.

L'invention a ainsi pour objet un dispositif de stockage d'objets sur palettes mobiles, tel que défini en revendication 1.

Le dispositif de stockage comprend un bâti relié à deux chaînes sans fin motorisées, une série de palettes entraînées par lesdites chaînes et des moyens de liaison entre chaque chaîne et chaque palette.

Selon l'invention, les moyens de liaison coopèrent avec des moyens d'entraînement horizontaux permettant un entraînement des palettes dans leurs déplacements horizontaux à une vitesse supérieure à celle des dites chaînes de manière à disposer les palettes en porte-à-faux dans les deux plans verticaux du dispositif.

Cette caractéristique permet de déplacer la palette dans son transfert horizontal plus rapidement que la chaîne et donc de disposer cette palette en porte-à-faux sur chacun des plans verticaux du dispositif. Eventuellement, en réglant la vitesse d'entraînement des moyens horizontaux, on pourra ajuster le porte-à-faux sur chacun des plans verticaux du dispositif. Par ailleurs, la vitesse des moyens d'entraînement horizontaux est également établie par rapport à la vitesse de déplacement de la chaîne permettant le bon positionnement des palettes sur chacun des plans verticaux du dispositif quelle que soit la vitesse d'entraînement des chaînes.

Selon une caractéristique avantageuse de l'invention, les moyens de liaison comprennent une première partie solidaire de la chaîne et une seconde partie fixée directement ou indirectement à la première partie, cette seconde partie étant reliée par une liaison glissière à la palette.

Cette caractéristique avantageuse permet de réaliser une fixation simple au niveau de la chaîne et également de permettre l'entraînement par les moyens d'entraînement horizontaux du plateau.

Selon une autre caractéristique avantageuse de l'invention, les moyens d'entraînement horizontaux comprennent au moins deux éléments d'appui dits supérieur et inférieur disposés au niveau du bâti et venant en appui sur les faces supérieure et inférieure de la palette, au moins un des éléments d'appui étant équipé de moyens de mise en rotation, l'actionnement des moyens de mise en rotation entraînant un glissement de la palette par rapport à la seconde partie.

Cette caractéristique avantageuse permet de conserver un contact constant lors du déplacement horizontal de la palette entre les moyens d'entraînement et ladite palette, de sorte que la palette reste horizontale et stable durant toute la phase d'entraînement horizontal de cette dernière.

Selon une autre caractéristique avantageuse de l'invention, le dispositif de stockage comprend des moyens de guidage de chaque palette permettant le guidage et la reprise du couple de basculement de la palette.

Cette caractéristique permet de limiter les efforts exercés notamment sur la liaison entre la palette et les chaînes et permet également d'augmenter la capacité de stockage en poids de chaque palette.

D'autres caractéristiques et avantages de l'invention apparaîtront plus clairement à la lecture de la description ci-après d'un exemple préféré de réalisation dans lequel la description n'est donnée qu'à titre d'exemple non limitatif et en référence aux dessins annexés parmi lesquels :
- la figure 1 représente de manière schématique en vue de perspective un exemple de réalisation d'un dispositif de stockage conforme à l'invention,
- les figures 2 à 4 représentent de manière schématique les différentes phases de déplacement d'une palette au cours de son circuit,
- la figure 5 représente une vue de face du dispositif de stockage conforme à l'invention dans lequel la palette est disposée conformément à son positionnement dans la figure 4.

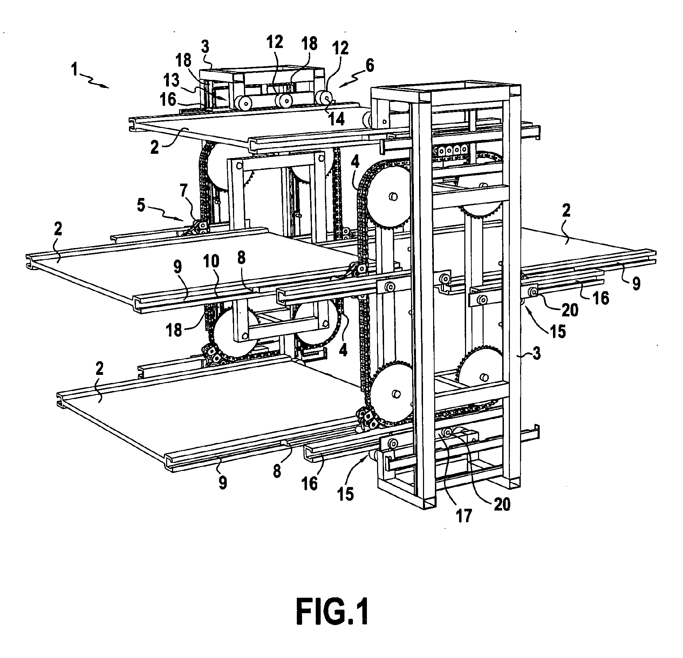

En se reportant principalement à la figure 1, on voit représenté un dispositif de stockage 1 d'objets sur palette mobile 2. Ce dispositif de stockage 1 comprend principalement un bâti 3 relié à deux chaînes 4 sans fin motorisées.

Les palettes 2 du dispositif de stockage 1 sont entraînées par les chaînes 4. On prévoit à cet effet des moyens de liaison 5 entre chaque chaîne 4 et chaque palette 2.

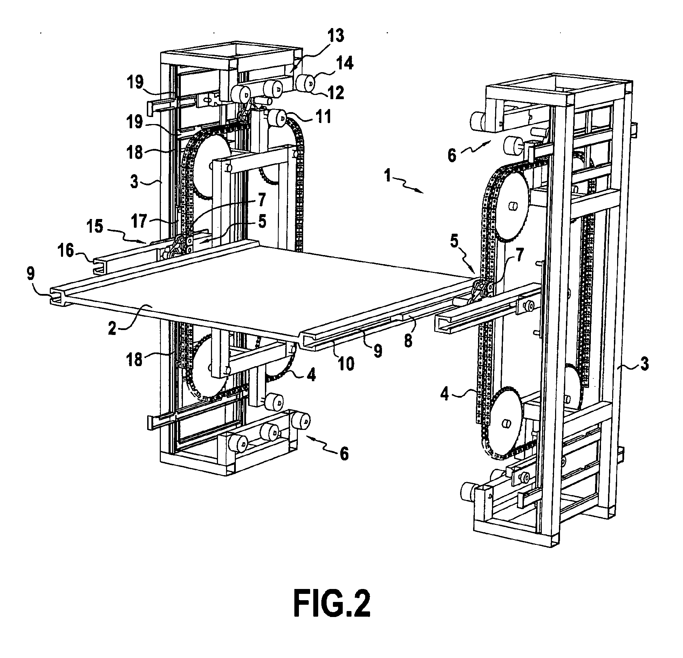

En se reportant cette fois plus particulièrement aux figures 2 à 4, on voit représenté un dispositif de stockage 1 tel qu'illustré à la figure 1 selon un second angle d'observation et dans lequel on n'a positionné qu'une seule palette 2 de manière à faciliter la lecture des figures.

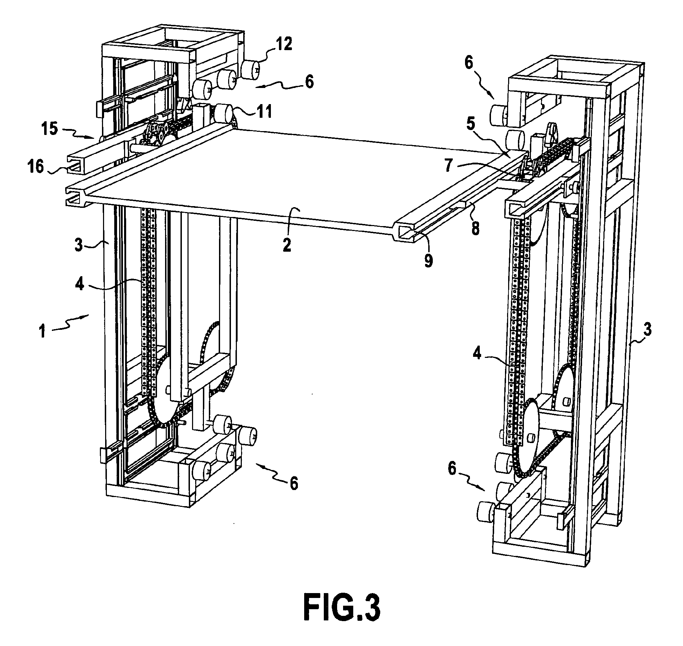

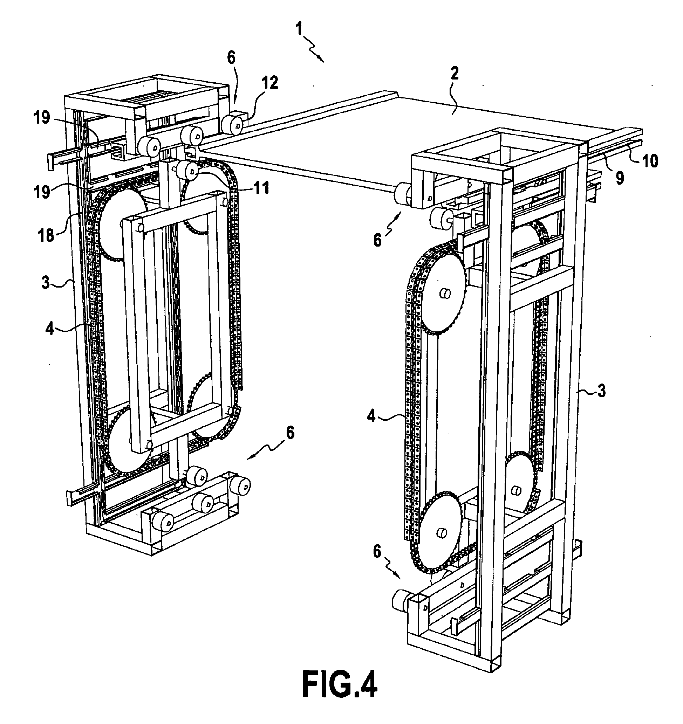

Le dispositif de stockage 1 comporte en outre des moyens d'entraînement horizontaux 6, ces moyens d'entraînement horizontaux 6 coopérant avec les moyens de liaison 5 précités de manière à permettre un entraînement des palettes 2 dans leurs déplacements horizontaux et tels que représentés en fonctionnement dans les figures 3 et 4.

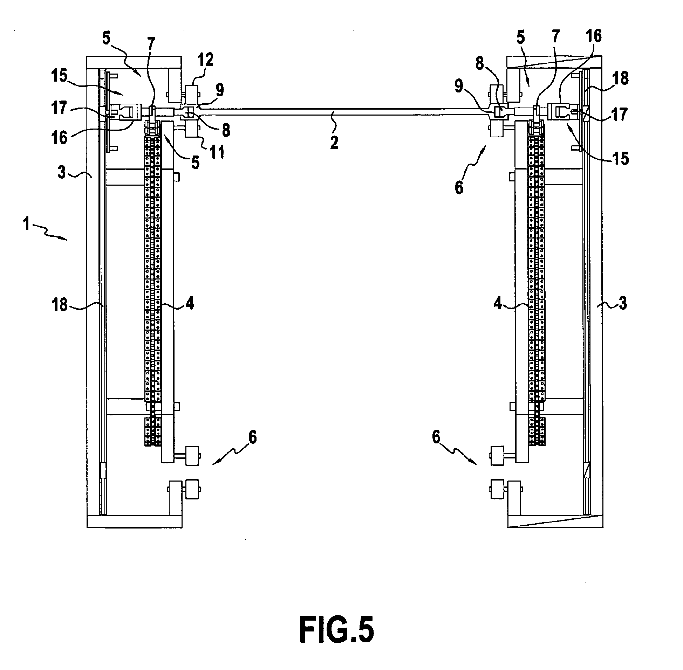

Avantageusement, comme illustrés aux modes de réalisation préférés des figures 1 à 5, les moyens de liaison 5 comprennent une première partie 7 solidaire de la chaîne 4 et une seconde partie 8 fixée directement ou indirectement à la première partie 7 et reliée par une liaison glissière à la palette 2.

Avantageusement, cette seconde partie 8 sera constituée par un coulisseau apte à glisser dans une coulisse 9 ménagée dans le chant latéral 10 de la palette 2.

Toutefois, d'autres modes de réalisation de cette liaison glissière entre la seconde partie 8 et la palette 2 pourront être envisagés par l'homme du métier et notamment la coulisse 9 pourra être réalisée par une pièce rapportée solidaire de la palette 2.

Avantageusement, la première partie solidaire 7 sera quant à elle constituée par une pièce de liaison articulée ou biellette.

En ce qui concerne cette pièce, il s'agit d'une pièce couramment utilisée pour venir faire la liaison entre une palette mobile et une chaîne afin de réaliser son entraînement. D'autres modes de réalisation connus de l'homme du métier ayant une fonctionnalité équivalente pourront également être utilisés pour réaliser cette liaison.

On voit également représenté aux figures 1 à 5 un mode de réalisation particulièrement avantageux des moyens d'entraînement horizontaux 6.

Dans ce mode de réalisation, ces moyens d'entraînement horizontaux 6 comprennent au moins deux éléments d'appui dits supérieur 12 et inférieur 11 disposés au niveau du bâti 3.

Dans ce mode de réalisation, on a disposé des moyens d'entraînement horizontaux 6 en partie supérieure et inférieure du bâti 3 et également sur chaque demi-partie de ce bâti 3.

Toutefois, en fonction du trajet prévu pour ces palettes 2, on pourra imaginer équiper uniquement la partie supérieure ou inférieure du bâti 3 en moyens d'entraînement 6.

On pourra également imaginer, si le poids des palettes 2 le permet, de disposer des moyens d'entraînement horizontaux 6 que d'un côté du bâti 3.

Ces éléments d'appui 11,12 sont équipés de moyens de mise en rotation, l'actionnement de ces moyens de mise en rotation 13 entraînant un glissement de la palette 2 par rapport à la seconde partie 8.

Comme représenté dans le mode de réalisation illustré, les éléments d'appui 11,12 sont constitués d'un cylindre 14 entraîné en rotation par une tige permettant l'actionnement du cylindre 14.

Dans une variante de réalisation non représentée dans les dessins annexés, on peut également prévoir que les moyens d'entraînement horizontaux 6 comprennent des moyens d'amortissement au niveau des éléments d'appui 11,12 permettant d'améliorer le contact entre les éléments d'appui 12 et la surface de la palette 2 lors de la translation horizontale.

Cette disposition permet également d'éviter les rebonds ou d'atténuer les vibrations lors de l'introduction du bord de la palette entre les éléments d'appui 11,12.

De manière à procurer une grande stabilité à la palette 2, on prévoit que les moyens d'entraînement 6 comprennent au moins trois éléments d'appui supérieurs 12 et un élément d'appui inférieur 11.

Bien entendu, d'autres combinaisons aisément à la portée de l'homme de l'art pourront être utilisées pour assurer la stabilité de la palette 2 lors de son déplacement horizontal.

Dans l'exemple des figures 1 à 5, le dispositif de stockage 1 comporte également des moyens de guidage 15.

Ces moyens de guidage 15 sont optionnels et dépendront de l'utilisation finale du dispositif de stockage ; ils seront particulièrement adaptés lorsque le dispositif de stockage 15 sera destiné au stockage d'objets lourds.

Ces moyens de guidage 15 de chaque palette 2 permettent le guidage et la reprise du couple de basculement de la palette 2.

Ces moyens de guidage 15 comprennent un premier élément dit de liaison 16 solidaire des moyens de liaison 5 et un second élément 17 dit de guidage coopérant avec des rails verticaux 18 et horizontaux 19 ménagés dans le bâti 3.

Le second élément 17 dit de guidage est relié par une liaison glissante avec le premier élément de liaison 16.

De manière avantageuse, ce second élément 17 est en forme de croix comme représenté aux figures 1 à 5 ou en forme de T avec un axe vertical et un axe horizontal, chaque axe comportant au moins deux roulettes 20 permettant au second élément 17 de rouler dans les rails verticaux 18 et horizontaux 19 du bâti 3.

En se reportant maintenant aux figures 2 à 4, on va expliquer le fonctionnement du dispositif de stockage 1.

Dans les plans verticaux du dispositif et notamment lorsque la palette 2 est positionnée telle que représentée à la figure 2, l'élévation de la palette 2 est classique à savoir que les chaînes 4 entraînent la palette 2 vers le haut par l'intermédiaire de la première partie solidaire de la chaîne 7 et de la seconde partie 8.

Lorsque la palette 2 arrive sur le plan horizontal du dispositif 2 tel que représenté aux figures 3 et 4, l'extrémité de la palette 2 puis l'ensemble de la palette 2 sont en contact avec les moyens d'entraînement horizontaux 6 qui entraînent la palette 2 à une vitesse supérieure à celle des chaînes 4 de manière à faire coulisser la palette 2 par rapport à la seconde partie 8 qui se déplace à la même vitesse que la chaîne 4.

Les vitesses relatives des moyens d'entraînement 6 par rapport aux vitesses de déplacement de la chaîne 4 sont calculées de manière à ce qu'en fin de déplacement horizontal de la palette 2, cette dernière ait coulissée par rapport à la seconde partie 8 de manière à être positionnée en porte-à-faux dans le second plan vertical du dispositif.

Dans ce second plan vertical, le déplacement de la palette 2 est également classique et il n'y a aucun glissement entre la seconde partie 8 et la palette 2.

L'entraînement dans le second plan horizontal à savoir en partie basse du bâti 3 est analogue à celui qui est réalisé en partie haute.

On voit bien que le dispositif de stockage 1 permet donc de contrôler le porte-à-faux de la palette 2 et de disposer cette palette 2 en porte-à-faux au niveau des deux plans verticaux du dispositif 1.

On voit également que le transfert entre les deux plans verticaux du dispositif se fait d'une manière complètement plane permettant de réaliser ce transfert avec des objets stockés sur la palette 2.

En ce qui concerne les moyens de guidage 15, ces derniers coulissent de manière classique dans les plans verticaux du dispositif 1 jusqu'en partie haute, le glissement étant effectué par les roulettes situées sur l'axe vertical de l'élément de guidage 17.

Pour permettre le passage sur les rails horizontaux 19 dans lesquels vont coulisser les roulettes 20, on prévoit une liaison glissière entre l'élément de liaison 16 et l'élément de guidage 17 ; lorsque l'élément de guidage 17 passe des rails verticaux 18 aux rails horizontaux 19, il se produit un glissement entre le premier élément de liaison 16 et l'élément de guidage 17 permettant de compenser le décalage de trajet, ce glissement s'effectuant également lorsque les moyens de guidage passent cette fois des rails horizontaux 19 aux rails verticaux 18 lors de la redescente de la palette.

Le fonctionnement des moyens de guidage 15 dans le second plan horizontal, c'est-à-dire en bas du bâti 3, est exactement analogue à celui effectué en partie haute.

Bien entendu, bien d'autres caractéristiques à la portée de l'homme de l'art auraient pu également être envisagées sans pour autant sortir du cadre de l'invention défini par les revendications ci-après.

## Revendications

1. Dispositif de stockage d'objets sur des palettes mobiles (2) comportant un bâti (3) relié à deux chaînes (4) sans fin motorisé qui définissent en combinaison deux plans verticaux, un premier plan horizontal en partie supérieure du bâti (3) et un second plan horizontal en partie inférieure du bâti (3), le dispositif de stockage comportant une série de palettes (2) entraînées par lesdites chaînes (4) et des moyens de liaison (5) entre chaque chaîne (4) et chaque palette (2) configurés pour translater les palettes (2) par rapport au bâti (3), selon lesdits plans verticaux et horizontaux, en les maintenant horizontalement, **caractérisé en ce que** les moyens de liaison (5) sont configurés pour déplacer horizontalement les palettes (2) par rapport aux chaînes (4), lesdits moyens de liaison (5) coopérant avec des moyens d'entraînement horizontaux (6) agencés en partie supérieure et en partie inférieure du bâti (3), lesdits moyens d'entraînement horizontaux (6) étant configurés pour entraîner les palettes (2) dans leur déplacement horizontaux par rapport aux chaînes (4), dans les premier et second plans horizontaux, à une vitesse supérieure à celles desdites chaînes (4) de manière à disposer les palettes (2) en porte à faux par rapport au deux plans verticaux.

2. Dispositif de stockage selon la revendication 1, dans lequel les moyens de liaison (5) comprennent :
- une première partie (7) solidaire de la chaîne,
- une seconde partie (8) fixée directement ou indirectement à la première partie et reliée par une liaison glissière à la palette (2).

3. Dispositif de stockage selon la revendication 2, dans lequel la seconde partie (8) est constituée par un coulisseau apte à glisser dans une coulisse (9) ménagée dans le chant latéral (10) de la palette (2).

4. Dispositif de stockage selon la revendication 2 ou 3, dans lequel la première partie (7) est constituée par une pièce de liaison articulée ou biellette.

5. Dispositif de stockage selon l'une quelconque des revendications 2 à 4, dans lequel les moyens d'entraînement horizontaux (6) comprennent au moins deux éléments d'appui (11,12), dits supérieur et inférieur, disposés au niveau du bâti (3) et venant en appui sur les faces supérieure et inférieure de la palette (2), au moins un des éléments d'appui (11,12) étant équipé de moyens de mise en rotation, l'actionnement des moyens de mise en rotation entraînant un glissement de la palette (2) par rapport à la seconde partie (8).

6. Dispositif de stockage selon la revendication 5, dans lequel les éléments d'appui (11,12) sont constitués d'un cylindre (14) entraîné en rotation par une tige.

7. Dispositif de stockage selon la revendication 5 et 6, dans lequel les moyens d'entraînement horizontaux (6) comprennent des moyens d'amortissement au niveau des éléments d'appui (11,12) permettant d'améliorer le contact entre les éléments d'appui (11,12) et la surface de la palette (2) lors de la translation horizontale.

8. Dispositif de stockage selon l'une quelconque des revendications 5 à 7, dans lequel les moyens d'entraînement horizontaux (6) comprennent au moins trois éléments d'appui supérieur (12) et un élément d'appui inférieur (11).

9. Dispositif de stockage selon l'une quelconque des revendications 1 à 8, dans lequel on prévoit des moyens d'entraînement horizontaux (6) dans les parties haute et basse du bâti (3) correspondant aux plans horizontaux du dispositif.

10. Dispositif de stockage selon l'une quelconque des revendications 1 à 9, comprenant des moyens de guidage (15) de chaque palette (2) permettant le guidage et la reprise du couple de basculement de la palette (2).

11. Dispositif de stockage selon la revendication 10, dans lequel les moyens de guidage (15) comprennent un premier élément (16) dit de liaison solidaire des moyens de liaison (5) et un second élément (17) dit de guidage, relié par une liaison glissante avec le premier élément de liaison (16) et coopérant avec des rails verticaux (18) et horizontaux (19) ménagés dans le bâti (3).

12. Dispositif de stockage selon la revendication 11, dans lequel le second élément dit de guidage (17) est en forme de T ou de croix avec un axe vertical et un axe horizontal, chaque axe comportant au moins deux roulettes (20) permettant au second élément (17) de rouler dans les rails verticaux (18) et horizontaux (19) du bâti (3).

## Claims

1. A storage device for storing objects on movable trays (2), the device comprising a frame (3) connected to two motor-driven endless chains (4) that together define two vertical planes, a first horizontal plane at the top portion of the frame (3), and a second horizontal plane at the bottom portion of the frame (3), the storage device having a series of trays (2) driven by said chains (4), and connection means (5) between each chain (4) and each tray (2) configured to move the trays (2) in translation relative to the frame (3) in said vertical and horizontal planes while keeping them horizontal, the storage device being **characterized in that** the convection means (5) are configured to move the trays (2) horizontally relative to the chains (4), said connection means (5) co-operating with horizontal drive means (6) arranged in the top and bottom portions of the frame (3), said horizontal drive means (6) being configured to drive the trays (2) in their horizontal movements relative to the chains (4) in the first and second horizontal planes at a speed that is greater than the speed of said chains (4) so as to cause the trays (2) to be cantilevered out relative to the two vertical planes.

2. A storage device according to claim 1, wherein the connection means (5) comprise:
a first portion (7) secured to the chain; and
a second portion (8) fastened directly or indirectly to the first portion and connected to the tray (2) via a slideway connection.

3. A storage device according to claim 2, wherein the second portion (8) is constituted by a slider suitable for sliding in a slideway (9) formed in the side edge face (10) of the tray (2).

4. A storage device according to claim 2 or claim 3, wherein the first portion (7) is constituted by a hinged connection part or link.

5. A storage device according to any one of claims 2 to 4, wherein the horizontal drive means (6) comprise at least two bearing elements (11, 12), referred to as top and bottom elements, arranged on the frame (3) and bearing against the top and bottom faces of the tray (2), at least one of the bearing elements (11, 12) being fitted with means for setting it in rotation, whereby actuating said means derives the tray (2) in sliding relative to the second portion (8).

6. A storage devise according to claim 5, in which each bearing element (11, 12) is constituted by a cylinder (14) driven in rotation by a rod.

7. A storage device according to claims 5 and 6, wherein the horizontal drive means (6) include damper means associated with the bearing elements (11, 12) serving to improve contact between the bearing elements (11, 12) and the surface of the tray (2) during horizontal movement in translation.

8. A storage device according to any one of claims 5 to 7, wherein the horizontal drive means (6) comprise at least three top bearing elements (12) and one bottom bearing element (11).

9. A storage device according to any one of claims 1 to 8, wherein horizontal drive means (6) are provided in the top and bottom portions of the frame (3) corresponding to the horizontal planes of the device.

10. A storage device according to any one of claims 1 to 9, including guide means (15) for each tray (2) enabling the tray (2) to be guided and enabling its tipping moment to be taken up.

11. A storage device according to claim 10, wherein the guide means (15) comprise a first element (16) referred to as a connection element secured to the connection means (5), and a second element (17) referred to as a guide element, connected by a sliding connection with the so-called "connection" first element (16) and cooperating with vertical and horizontal rails (18, 19) formed in the frame (3).

12. A storage device according to claim 11, wherein the so-called "guide" second element (17) is T-shaped or cross-shaped with a vertical axis and a horizontal axis, each axis including at least two wheels (20) enabling the second element (17) to run in the vertical and horizontal rails (18, 19) of the frame (3).

## Patentansprüche

1. Lagerungsvorrichtung zur Lagerung von Gegenständen auf mobilen Paletten (2), umfassend ein Gestell (3), das mit zwei motorisierten Endlosketten (4) verbunden ist, die in Kombination zwei vertikale Ebenen, eine erste horizontale Ebene im oberen Teil des Gestells (3) und eine zweite horizontale Ebene im unteren Teil des Gestells (3) definieren, wobei die Lagerungsvorrichtung eine Reihe von Paletten (2), die über die Ketten (4) angetrieben werden, sowie Verbindungsmittel (5) zwischen jeder Kette (4) und jeder Palette (2) umfaßt, die ausgebildet sind, um die Paletten (2) - unter horizontalem Halten dieser - gegenüber dem Gestell (3) entlang der vertikalen und horizontalen Ebenen zu verschieben, **dadurch gekennzeichnet, daß** die Verbindungsmittel (5) ausgebildet sind, um die Paletten (2) gegenüber den Ketten (4) horizontal zu bewegen, wobei die Verbindungsmittel (5) mit horizontalen Antriebsmitteln (6), die im oberen Teil und im unteren Teil des Gestells (3) angeordnet sind, zusammenwirken, wobei die horizontalen Antriebsmittel (6) ausgebildet sind, um die Paletten (2) in ihrer Horizontalbewegung gegenüber den Ketten (4), in der ersten und der zweiten horizontalen Ebene, mit einer Geschwindigkeit, die höher als die der Ketten (4) ist, anzutreiben, um die Paletten (2) gegenüber den beiden vertikalen Ebenen vorspringend anzuordnen.

2. Lagerungsvorrichtung nach Anspruch 1, wobei die Verbindungsmittel (5) umfassen:
- ein erstes Teil (7), das mit der Kette fest verbunden ist,
- ein zweites Teil (8) das direkt oder indirekt an dem ersten Teil befestigt ist und über eine Gleitschienenverbindung mit der Palette (2) verbunden ist.

3. Lagerungsvorrichtung nach Anspruch 2, wobei das zweite Teil (8) von einem Gleitstück gebildet ist, das geeignet ist, in einer in der Seitenkante (10) der Palette (2) ausgebildeten Gleitführung (9) zu gleiten.

4. Lagerungsvorrichtung nach Anspruch 2 oder 3, wobei das erste Teil (7) von einem gelenkigen Verbindungsteil oder einem Schwingarm gebildet ist.

5. Lagerungsvorrichtung nach einem der Ansprüche 2 bis 4, wobei die horizontalen Antriebsmittel (6) wenigstens zwei sogenannte obere und untere Anlageelemente (11, 12) umfassen, die im Bereich des Gestells (3) angeordnet sind und an der Oberseite und der Unterseite der Palette (2) in Anlage kommen, wobei wenigstens eines der Anlageelemente (11, 12) mit Rotationsmitteln ausgestattet ist, wobei die Betätigung der Rotationsmittel ein Gleiten der Palette (2) gegenüber dem zweiten Teil (8) bewirkt.

6. Lagerungsvorrichtung nach Anspruch 5, wobei die Anlageelemente (11, 12) von einem Zylinder (14), der über eine Stange drehangetrieben wird, gebildet sind.

7. Lagerungsvorrichtung nach Anspruch 5 und 6, wobei die horizontalen Antriebsmittel (6) Dämpfungsmittel im Bereich der Anlageelemente (11, 12) umfassen, die ermöglichen, den Kontakt zwischen den Anlageelementen (11, 12) und der Oberfläche der Palette (2) während der Horizontalverschiebung zu verbessern.

8. Lagerungsvorrichtung nach einem der Ansprüche 5 bis 7, wobei die horizontalen Antriebsmittel (6) wenigstens drei obere Anlageelemente (12) und ein unteres Anlageelement (11) umfassen.

9. Lagerungsvorrichtung nach einem der Ansprüche 1 bis 8, wobei horizontale Antriebsmittel (6) in dem oberen und unteren Teil des Gestells (3), die den horizontalen Ebenen der Vorrichtung entsprechen, vorgesehen sind.

10. Lagerungsvorrichtung nach einem der Ansprüche 1 bis 9, umfassend Mittel zum Führen (15) einer jeden Palette (2), die das Führen und die Aufnahme des Kippmoments der Palette (2) ermöglichen.

11. Lagerungsvorrichtung nach Anspruch 10, wobei die Führungsmittel (15) ein erstes sogenanntes Element zum festen Verbinden (16) der Verbindungsmittel (5) sowie ein zweites sogenanntes Führungselement (17), das über eine gleitende Verbindung mit dem ersten sogenannten Element zum festen Verbinden (16) verbunden ist und mit in dem Gestell (3) ausgebildeten vertikalen (18) und horizontalen (19) Schienen zusammenwirkt.

12. Lagerungsvorrichtung nach Anspruch 11, wobei das zweite sogenannte Führungselement (17) T- oder kreuzförmig, mit einer vertikalen Achse und einer horizontalen Achse, ausgebildet ist, wobei jede Achse wenigstens zwei Rollen (20) umfaßt, die dem zweiten Element (17) ermöglichen, in den vertikalen (18) und horizontalen (19) Schienen des Gestells (3) zu laufen.
